# EUROPEAN PATENT APPLICATION

(11) **EP 3 783 380 A1**
(43) Date of publication of application: **24.02.2021**
(21) Application number: 19193337.3
(22) Date of filing: 23.08.2019
(51) Int. Cl.: G01S 5/02, H04B 17/345

(54) **LOCATING AN INTERFERING IOT DEVICE**

(71) Applicant: Deutsche Telekom AG, 53113 Bonn (DE)
(72) Inventor: BÖHL, Martin, 90461 Nürnberg (DE)
(74) Representative: Raible Deissler Lehmann Patentanwälte PartG mbB

(57) **Abstract**

Method for monitoring an IoT (Internet of Things) cell of a radio access network, the method comprising the steps of monitoring an IoT node, the monitored IoT node servicing an IoT cell of a radio access network and having a known position, and detecting an interference of the IoT cell serviced by the monitored IoT node, and computer program product for monitoring an IoT cell of a radio access network.

## Description

The invention relates to a method for monitoring an loT (Internet of Things) cell of a radio access network (RAN). The method comprises the steps of monitoring an loT node, the monitored loT node servicing an loT cell of a radio access network and having a known position, and detecting an interference of the loT cell serviced by the monitored loT node. Furthermore, the invention relates to a computer program product for monitoring an loT cell of a radio access network.

loT denotes a technology of a global infrastructure enabling things, i.e. physical or virtual devices, hereinafter referred to as loT devices, to communicate and cooperate with each other. For instance, loT devices may comprise industrial robots, smart houses, trash bins, energy meters, streetlamps and the like.

loT devices usually communicate with each other via a radio access network. The RAN comprises a plurality of radio cells each of them being serviced by a node of the radio access network. Each node comprises a circuitry and an antenna connected to the circuitry, wherein the antenna has a known position, i.e. known geopositional coordinates, and a transmission power of the antenna defines a transmission range of the node and, hence, a geographical extent of the cell serviced by the node. Hereinafter, the cells are denoted as loT cells and the nodes are denoted as loT nodes.

For establishing a wireless communication via the RAN an loT device up-links to an loT node of an loT cell which the loT device is located in. The wireless communication may use a plurality of carrier frequencies of a reserved frequency band which are commonly called subcarriers (SC). The loT device usually comprises a SIM (Subscribers Identity Module) or the like for authenticating the loT device to the RAN. Up-link schedules of loT devices may widely vary depending on the type of loT device, i.e. time intervals between two subsequent up-links may be in a range from a few seconds up to a few days.

An loT cell may accommodate a plurality of loT devices wherein the loT node servicing the loT cell is regularly up-linked by the plurality of loT devices being accommodated within the loT cell which causes a corresponding communication load on the loT node. As more and more traditional devices are replaced by loT devices, the communication load on loT nodes increases correspondingly.

The more an loT node is loaded the more a reliable function of the loT node is threatened. Apart from that, the loT node may be interfered by defective loT devices which additionally threatens the reliable function of the loT node. The risk of defective loT devices also increases as the number of loT devices increases. An loT device may be defective due to a hardware deficiency or due to a device wear on the one hand, but on the other hand also due to a wrong configuration, an erroneous deviation from a mobile standard (3GPP), a cheap hardware with insufficiently sharp separated subcarriers (SC), manipulation, misuse and the like.

Additional interferences of the loT node may result from a passive intermodulation (PIM) due to topological characteristics of the serviced loT cell or artificial structures, i.e. building and the like, being located within the loT cell. The loT cell may also be interfered by loT devices up-linking to a different RAN.

Unfortunately, an loT device may keep on up-linking regularly when it is not being used any longer or even has been disposed. This unintended behavior may result from an incorrect implementation of a power control of the loT device. For example, a refrigerator disposed on a waste site may keep on up-linking regularly for up to 10 years due to a remaining lifetime of a battery pack.

Any interfering loT device, hereinafter, is denoted also a defective loT device independent of the cause of the interference.

It is, therefore, an object of the invention to suggest a method for monitoring an loT cell of a radio access network which allows for locating and/or identifying an loT device interfering the loT cell. It is another object of the invention to provide a computer program product for monitoring an loT cell of a radio access network, the computer program product being configured for locating and/or identifying an loT device interfering the loT cell.

One aspect of the invention is a method for monitoring an loT (Internet of Things) cell of a radio access network, the method comprising the steps of monitoring an loT node, the monitored loT node servicing an loT cell of a radio access network and having a known position, and detecting an interference of the loT cell serviced by the monitored loT node. The method indeed supports detecting an interference of an loT cell. However, locating and/or indentifying a defective loT device interfering the monitored loT cell is not supported.

According to the invention, in another step, a plurality of loT nodes of the radio access network is monitored during a predetermined monitoring time. Each monitored loT node services an loT cell of the radio access network and has a known position wherein the loT cells serviced by the plurality of monitored loT nodes are located adjacent to each other. Empiric observations have shown that not only the local loT cell which a defective loT device is located in, is interfered by the defective loT device, but loT cells being located adjacent to the local loT cell are usually also interfered due to small frequency spacings of subcarriers between adjacent loT cells. Simultaneously monitoring a plurality of adjacent loT cells, thus, allows for discovering time correlations between interferences of the adjacent loT cells.

When an interference of an loT cell serviced by a monitored loT node is detected an interference entry for the detected interference is stored wherein the interference entry comprises an identifier of the loT node servicing the interfered loT cell and an interference timestamp indicating the interference time of the detected interference. Storing interference entries during the monitoring time allows for aggregating interference data sufficient for a later statistical assessment.

According to the invention an interfering loT device is determined by correlating the loT node identifiers of the stored interference entries with the interference timestamps of the stored interference entries. Preferably, the determined interfering loT device is located by triangulating between the known positions of interfered loT nodes having correlated loT node identifiers. Determination of the interfering defective loT device relies on the empiric observation that a defective loT device not only interferes the local loT cell, i.e. the loT cell it is located in, but usually also loT cells being located adjacent to the local loT cell due to small subcarrier frequency spacings between adjacent loT cells. In other words, the correlation reveals adjacent loT cells which are interfered simultaneously which implies a single defective loT device. The determined defective loT device, thus, is not required to up-link to the interfered loT cell for being located by the inventive method.

From the positions of the loT nodes servicing the interfered loT cells a position of the defective loT device may be calculated by triangulation. It is noted that a "triangulation" being based on only two loT nodes results in a calculated position substantially in form of a straight line located between the two loT nodes and extending perpendicular to a straight connecting line between the two loT nodes. In case the triangulation is based on three loT nodes the calculated position is a point within a triangle formed by the three loT nodes. When the "triangulation" is based on more than three loT nodes, the "triangulation" is overde-termined resulting in a higher precision of the calculated position.

In preferred embodiments the interference entry further comprises a measured strength value of the detected interference and/or triangulating comprises using a measured strength value as a triangulation weight. Weighting the positions of the loT nodes of the interfered loT cells with the respective interference strengths increases the precision of locating.

Additionally or alternatively, the interference entry may further comprise an loT device identifier for every loT device being up-linked to a monitored loT node at the interference time and an interfering loT device is identified by correlating the loT device identifiers of the stored interference entries with the interference timestamps of the stored interference entries. This embodiment requires the defective loT device to up-link to the interfered loT cells and relies on the empiric observation that a defective loT device not only interferes the servicing loT cell, i.e. the loT cell it up-links to, but usually also loT cells being located adjacent to the servicing loT cell due to small subcarrier frequency spacings between adjacent loT cells. Identifying a defective loT device exceeds locating the defective loT device and facilitates freeing the interfered loT cell from the defective loT device.

It is pointed out that the invention not only relates to locating a defective loT device optionally in combination with identifying the defective loT device but, conversely, also relates to identifying a defective loT device optionally in combination with locating the defective loT device, i.e. the invention relates to locating and/or identifying a defective loT device.

Preferably, an IMSI (International Mobile Subscriber Identity) is stored as the loT device identifier. The IMSI is a globally unique identifier and unambiguously identifies the loT device all over the world.

In these embodiments storing the IMSI may comprise reading an S-TMSI of the up-linked loT device and determining the IMSI associated with the read S-TMSI. The S-TMSI (SAE Temporary Mobile Subscriber Identity) is a unique identifier within an loT cell and unambiguously identifies the loT device within the loT cell.

The IMSI is preferably determined by using a trace box or by querying a mobility management entity database (MME-DB). The trace box (or other implemented Trace-Tools which are working with loT-Signalling-Feed) is a tool to trace the location of a subscriber within the radio access network. The mobility management entity database is a component of the radio access network allowing for tracing a subscriber within the radio access network. The read S-TMSI may be associated with the IMSI by either using the trace box or querying the mobility management entity database. Both the trace box and the mobility management entity database allow for a very fast association of the read S-TMSI and the IM-SI.

In advantageous embodiments correlating comprises calculating a correlation coefficient for every identifier of an loT node or an loT device of the stored interference entries and the timestamps of the stored interference entries and determining an interfering loT device or identifying an interfering loT device comprises comparing every calculated correlation coefficient with a predetermined correlation threshold value. The correlation coefficient is a numerical measure characterizing the statistical relation of two variables.

In the context of the invention one variable to be correlated is the loT node identifier or the loT device identifier, particularly the IMSI of the loT device, while the other variable to be correlated is the interference timestamp and/or the strength (value) of the detected interference (in the following also called interference strength (values)). The higher the computed correlation coefficient is the more possible is a significant relationship between the correlated variables. The predetermined correlation threshold value defines the minimum significance required for determining and identifying, respectively. The predetermined correlation threshold value may be adjusted in order to achieve a reasonable determination and identification rate, respectively.

In many embodiments detecting an interference comprises measuring a value of a noise power of the loT node as the strength value of the detected interference and alerting when a measured value of the noise power exceeds a predetermined noise power threshold value. The noise power of an loT node may be measured very easily and is strongly correlated to an interference of the loT node. Again, the predetermined noise power threshold value defines the minimum noise power required for detecting an interference, i.e. measured values of the noise power being higher than the noise power threshold value are considered to be an interference while measured values of the noise power being lower than the noise power threshold are not. The predetermined noise power threshold value may be adjusted in order to achieve a reasonable detection rate.

The method may be carried out during a predetermined monitoring time of at least one week. One week appears to be a monitoring time sufficient to determine or identify even defective loT devices which very rarely interfere. For instance, a street lamp may usually communicate, i.e. send up-link packets, every second day only for about 10 seconds. As another example, an energy meter like an electricity meter may communicate every 100 hours only.

The method is advantageously carried out for a plurality of narrow band (NB) loT cells. The term narrow band loT cell shall be understood very generally. In the context of the invention, narrow band loT cells may comprise LTE (Long-Term Evolution) Cat NB1 cells, LTE Cat NB2 cells, LTE-M cells, 5G NB-loT cells and any known or future type of loT cells.

The method may be carried out for an loT node servicing up to 1000 loT devices, particularly up to 6000 loT devices and preferably more than 6000 loT devices. In other words, even loT nodes servicing a very plurality of loT devices may be monitored by means of the inventive method. Moreover, the method will be the more necessary and useful the more the loT extends, i.e. the more devices are provided with an loT functionality.

Another aspect of the invention is a computer program product for monitoring an loT cell of a radio access network, which has an interference tool. Computer program products having an interference tool for monitoring an loT cell of a radio access network are known and already used by service personnel for tracing interferences of loT cells.

According to the invention the interference tool is configured to carry out a method according to the invention. The inventive computer program product, thus, is able to automatically locate an interfering loT device and/or to identify an interfering loT device.

Preferably, the interference tool is configured for monitoring a plurality of loT nodes, each monitored loT node servicing an loT cell of a radio access network and having a known position. Monitoring a plurality of loT nodes simultaneously allows for correlating a plurality of interferences occurring in a plurality of loT cells being located adjacent to each other with the respective interference times.

The interference tool may have a trigger module configured for detecting an interference of an loT node by comparing a measured value of a noise power of the loT node with a predetermined noise power threshold value and alerting when the measured value of the noise power exceeds the predetermined noise power threshold value. The trigger tool by be activated by a user and, upon activation, runs continuously until it is stopped by the user. The trigger tool is set up for alerting an interference only in case the measured value of the noise power is to be considered an interference wherein the predetermined noise power threshold value is adjustable, i.e. may be adjusted by the user.

The interference tool advantageously has a scheduler module configured for starting monitoring of the plurality of loT nodes upon detection of an interference and/or confirmation of a user and stopping monitoring of the plurality of loT nodes after a predetermined monitoring time. The scheduler module manages the monitoring time. The monitoring time may be started automatically or manually or upon a user confirmation in response to an alerted interference.

Preferably, the interference tool has a correlation module configured for correlating identifiers of loT nodes or loT devices of stored interference entries with interference timestamps and/or interference strength values of the stored interference entries. The correlation module implements a statistical method for calculating correlation coefficients which is applied to the stored interference entries.

In many embodiments the interference tool has an interface configured for communicating with a trace box and/or with a mobility management entity database of the radio access network. The interface enables the interference tool for connecting to the trace box and/or the mobility management entity database via the radio access network in order to associate an IMSI with an S-TMSI of an loT device.

Alternatively or additionally the interference tool may have a data export module configured for exporting stored interference entries. The data export module allows for analyzing the interference entries off-line and possibly at a later time.

It is an essential advantage of the method according to the invention that any interfering loT device may be located and possibly identified in a widely automatic and effective manner. The location and the identity of an interfering loT device may be used to easily free an interfered loT cell from any interference by a defective loT device and maintaining a reliable function of the loT cell.

Further advantages and configurations of the invention become apparent from the following description and the enclosed drawings.

It shall be understood that the features described previously and to be described subsequently may be used not only in the indicated combinations but also in different combinations or on their own without leaving the scope of the present invention.

The invention is described in detail by means of an exemplary embodiment and with reference to the drawings.
- Fig. 1: shows schematically a partial view of a radio access network according to prior art;
- Fig. 2: shows schematically a lateral view of three different IoT devices according to prior art;
- Fig. 3: shows schematically a lateral view of two of the IoT devices shown in fig. 2 being up-linked to a first IoT node, one of them interfering the first IoT node, an adjacent second IoT node and an adjacent third IoT node;
- Fig. 4: shows schematically a plurality of thousand IoT devices up-linking to a single IoT node;
- Fig. 5: shows schematically a first graph of a chronological sequence of measured noise power values of an interfered IoT node;
- Fig. 6: shows schematically a second graph of a chronological sequence of measured noise power values of an interfered IoT node;
- Fig. 7: shows schematically a partial flow diagram of a method according to an embodiment of the invention for monitoring an IoT cell of the radio access network partially shown in fig. 1.

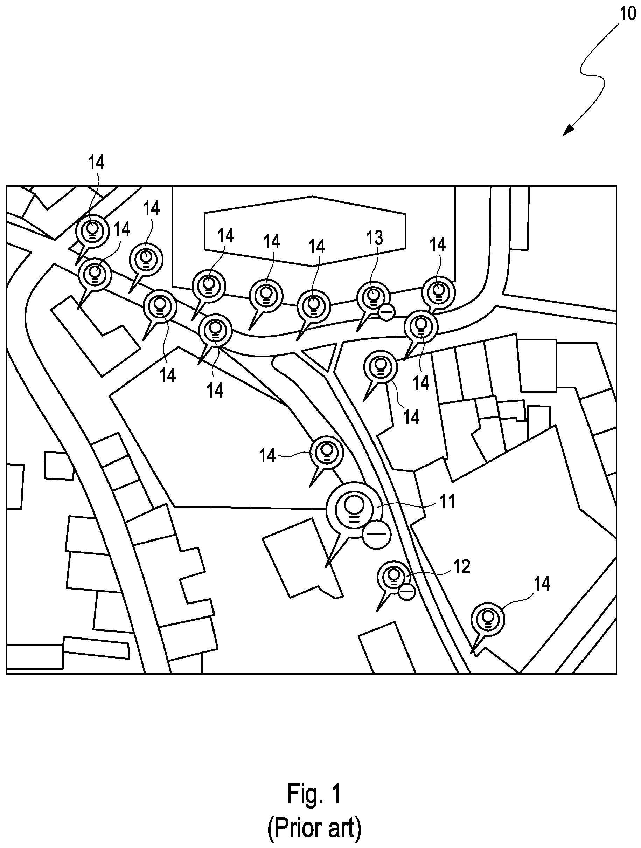

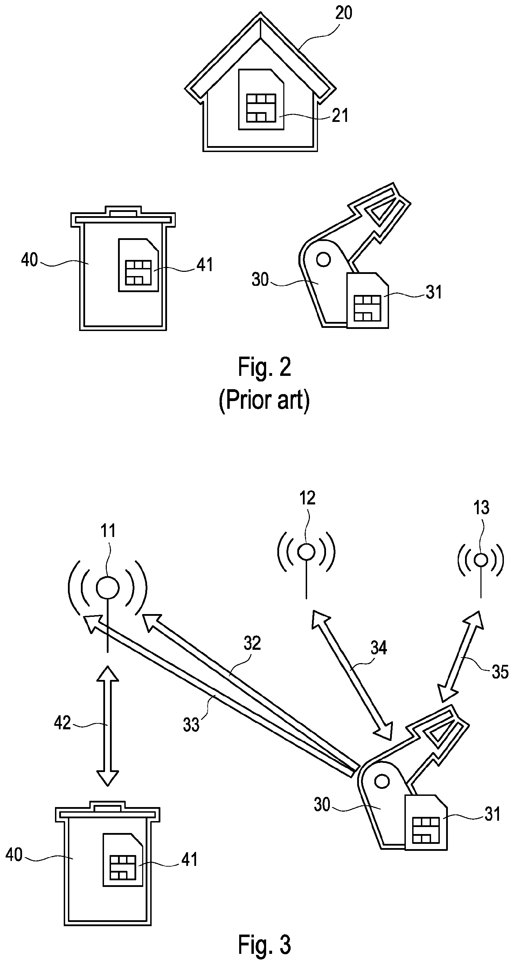

Fig. 1 shows schematically a partial view of a radio access network (RAN) 10 according to prior art. The radio access network supports an Internet of Things (loT) and comprises a plurality of narrow band (NB) loT cells (not visible) and a plurality of loT nodes 11, 12, 13, 14. Each loT node 11, 12, 13, 14 has a known position, i.e. known geopositional coordinates, and services an loT cell. The loT nodes 11, 12, 13 are interfered while the loT nodes 14 are not. Each loT node 11, 12, 13, 14 may service up to 1000 loT devices 20, 30, 40 (see fig. 2), particularly up to 6000 loT devices 20, 30, 40 and preferably more than 6000 loT devices 20, 30, 40.

The loT cells serviced by the loT nodes 11, 12, 13, 14 are exemplarily displayed to cover an area in the city of Bonn. The invention, however, is not restricted neither to Bonn nor to this area and may be readily applied to any different area around the world.

Fig. 2 shows schematically a lateral view of three different loT devices 20, 30, 40 according to prior art. The first loT device 20 is a smart house having a SIM 21. The second loT device 30 is an industrial robot having a SIM 31. The third loT device 40 is a trash bin having a SIM 41. All three loT devices 20, 30, 40 are emphasized by means of a frame as being defective. The exemplary loT devices 20, 30, 40 do no restrict the invention. Instead, the invention covers every actual or future loT device.

Fig. 3 shows schematically a lateral view of two of the loT devices 20, 30, 40 shown in fig. 2 being up-linked to a first loT node 11, one of them interfering the first loT node 11, an adjacent second loT node 12 and an adjacent third loT node 13. The second loT device 30 and the third loT device 40 are up-linked 32, 42 to the first loT node 11. The three adjacent loT nodes 11, 12, 13 are each interfered 33, 34, 35 by the second loT device 30.

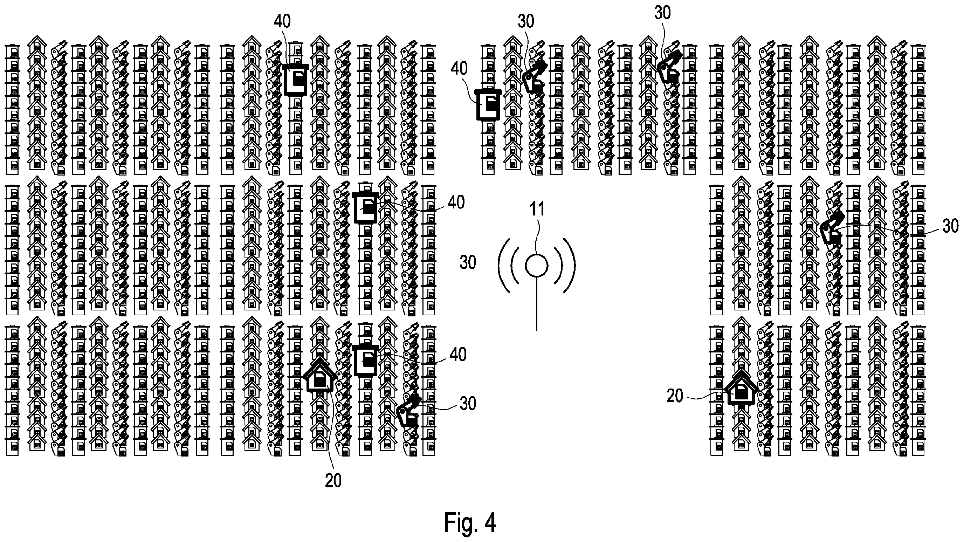

Fig. 4 shows schematically a plurality of thousand loT devices 20, 30, 40 up-linking to a single loT node 11, i.e. the plurality of loT devices 20, 30, 40 is accommodated in the loT cell serviced by the loT node 11. Among the thousand loT devices 20, 30, 40, are two defective smart houses 20, four defective industrial robots 30 and four defective trash bins 40, each defective loT device being emphasized by means of a frame, and interfere the loT node 11. The ten defective loT devices 20, 30, 40 are 1% of the thousand loT devices 20, 30, 40.

Freeing the loT cell serviced by the loT node 11 from the ten defective loT devices 20, 30, 40 would be very desirable in order to render a function of the loT node 11 more reliable. Of course, this situation is only exemplary and does not restrict the invention. Instead, the invention also covers loT cells with a different number of accommodated loT devices 20, 30, 40 and/or a different number of defective loT devices 20, 30, 40.

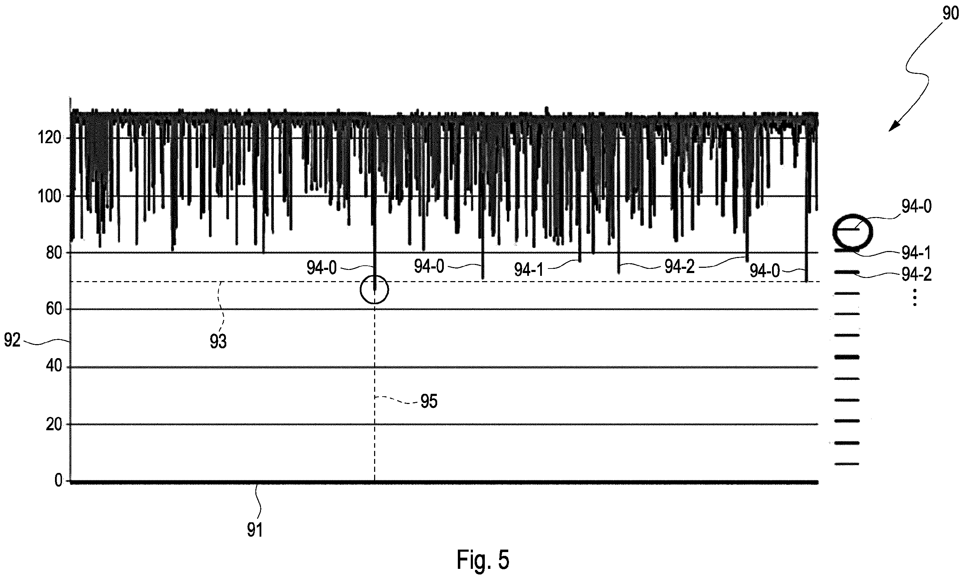

Fig. 5 shows schematically a first graph 90 of a chronological sequence of measured noise power values 94-0, 94-1, 94-2 of an interfered loT node 11, 12, 13. The first graph 90 has an abscissa 91 showing a time proceeding from left to right and an ordinate 92 showing a noise power increasing from top to bottom. The first graph 90 further shows a predetermined noise power threshold value 93 of -70 dB and a plurality of measured noise power values 94-0, 94-1, 94-2 measured at the interfered loT node 11, 12, 13 at different measuring times, each measuring time having a timestamp. The measured noise power values 94-0, 94-1, 94-2 correspond to subcarriers 0, 1, 2 of the loT node 11, 12, 13, respectively.

One measured noise power value 94-0 of the subcarrier 0 exceeds the predetermined noise power threshold value 93 (emphasized by a circle) and, hence, is considered to be an interference defining an interference time 95.

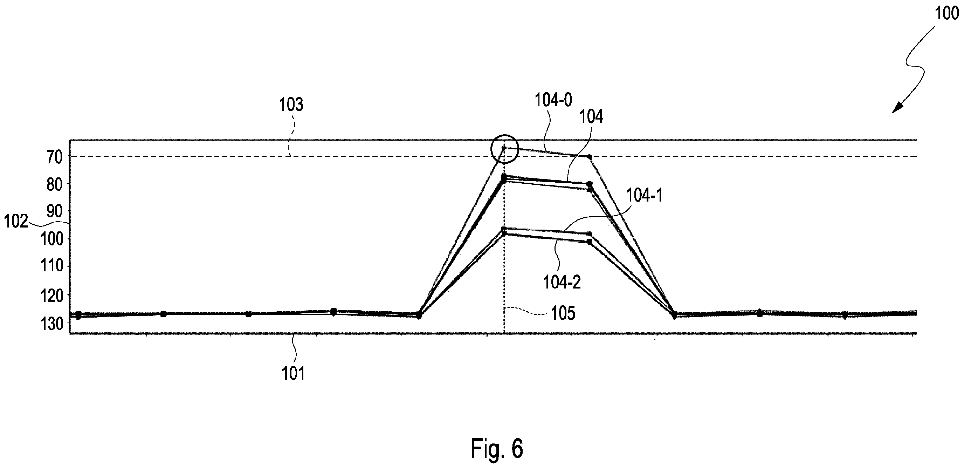

Fig. 6 shows schematically a second graph 100 of a chronological sequence of measured noise power values 104-0, 104-1, 104-2 of an interfered loT node 11, 12, 13. The second graph 100 has an abscissa 101 showing a time proceeding from left to right and an ordinate 102 showing a noise power increasing from bottom to top. The second graph 100 further shows a predetermined noise power threshold value 103 of -70 dB and a plurality of measured noise power values 104-0, 104-1, 104-2 measured at the interfered loT node 11, 12, 13 at different measuring times, each measuring time having a timestamp. The measured noise power values 104-0, 104-1, 104-2 correspond to subcarriers 0, 1, 2 of the loT node 11, 12, 13, respectively.

One measured noise power value 104-0 of the subcarrier 0 exceeds the predetermined noise power threshold value 103 (emphasized by a circle) and, hence, is considered to be an interference defining an interference time 105. Additionally, the second graph 100 shows a measured average noise power value 104 which averages the subcarriers 0, 1, 2.

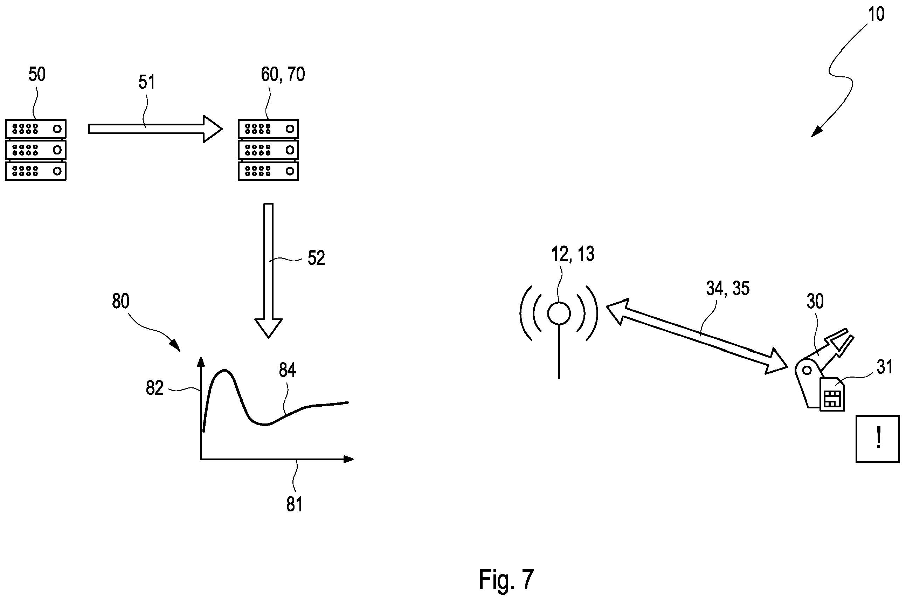

Fig. 7 shows schematically a partial flow diagram of a method according to an embodiment of the invention for monitoring an loT cell of the radio access network 10 partially shown in fig. 1.

The method is carried out by means of a computer program product for monitoring an loT cell of the radio access network 10. The computer program product has an interference tool 50 to be run by a processor of a computer connected to the radio access network 10 and being configured for monitoring the plurality of loT nodes 11, 12, 13, 14 of the radio access network 10.

The interference tool 50 has a trigger module configured for detecting an interference of an loT node 11, 12, 13, 14 by comparing a measured value of a noise power 94-0, 94-1, 94-2, 104-0, 104-1, 104-2 of the loT node 11, 12, 13, 14 with a predetermined noise power threshold value 93, 103 and alerting when the measured value of the noise power 94-0, 94-1, 94-2, 104-0, 104-1, 104-2 exceeds the predetermined noise power threshold value 93, 103.

The interference tool 50 further has a scheduler module configured for starting monitoring of the plurality of loT nodes 11, 12, 13, 14 upon detection of an interference and/or confirmation of a user and stopping monitoring of the plurality of loT nodes 11, 12, 13, 14 after a predetermined monitoring time.

The interference tool 50 additionally has a correlation module configured for correlating identifiers of loT nodes 11, 12, 13, 14 or loT devices 20, 30, 40 of stored interference entries with interference timestamps and/or interference strength values of the stored interference entries.

The interference tool 50 may also have an interface configured for communicating with a trace box 70 and/or with a mobility management entity database 60 of the radio access network 10. The interference tool 50 preferably has a data export module configured for exporting stored interference entries.

The method for monitoring an loT cell of a radio access network 10 comprises the following steps:
The plurality of loT nodes 11, 12, 13, 14 of the radio access network 10 is monitored during a predetermined monitoring time, preferably a predetermined monitoring time of at least one week. The monitoring time may be adjusted to the particular requirements of the loT cells to be monitored and the loT devices being assumed to be accomodated by the loT cells to be monitored. The monitored loT cells are located adjacent to each other.

When an interference of an loT cell serviced by a monitored loT node 11, 12, 13 is detected an interference entry for the detected interference is stored. The stored interference entry comprises an identifier of the loT node 11, 12, 13 servicing the interfered loT node 11, 12, 13 and an interference timestamp and/or an interference strength value of the detected interference. Detecting an interference may comprise measuring the value of a noise power 94-0, 94-1, 94-2, 104-0, 104-1, 104-2 of the loT node 11, 12, 13, 14 as the strength value of the detected interference and alerting when a measured value of the noise power 94-0, 94-1, 94-2, 104-0, 104-1, 104-2 exceeds the predetermined noise power threshold value 93, 103. The graph 80 being shown in fig. 7 has an abscissa 81 and an ordinate 82 corresponding to the graph 100 and only symbolically shows a curve of an interference strength 84.

An interfering loT device 20, 30, 40 is determined by correlating the loT node identifiers of the stored interference entries with the interference timestamps of the stored interference entries. Determining an interfering loT device 20, 30, 40 or identifying an interfering loT device 20, 30, 40 comprises comparing every calculated correlation coefficient with a predetermined correlation threshold value. Correlating preferably comprises calculating a correlation coefficient for every identifier of an loT node 11, 12, 13, 14 or an loT device 20, 30, 40 of the stored interference entries with respect to every timestamp of the stored interference entries, optionally also with respect to respective interference strength values.

The determined interfering loT device 20, 30, 40 is located by triangulating between the known positions of interfered loT nodes 11, 12, 13 having correlated loT node identifiers.

The interference entry may further comprise a measured strength value of the detected interference and triangulating may comprise using a measured strength value as a triangulation weight.

The interference entry may further comprise an loT device identifier for every loT device 20, 30, 40 being up-linked to a monitored loT node 11, 12, 13, 14 at an interference time 105 and an interfering loT device 20, 30, 40 may be identified by correlating the loT device identifiers of the stored interference entries with the interference timestamps of the stored interference entries. Preferably, an IMSI 52 is stored as the loT device identifier. Storing the IMSI 52 may comprise reading an S-TMSI 51 of the up-linked loT device 20, 30, 40 and determining the IMSI 52 associated with the read S-TMSI 51. The IMSI 52 may be determined by using a trace box 70 or by querying a mobility management entity database (MME-DB) 60 of the radio access network 10.

### Reference numerals

- 10: radio access network
- 11: interfered IoT node
- 12: interfered IoT node
- 13: interfered IoT node
- 14: interference-free IoT node
- 20: IoT device (smart house)
- 21: SIM card
- 30: IoT device (industrial robot)
- 31: SIM card
- 32: Up-Link
- 33: interference
- 34: interference
- 35: interference
- 40: IoT device (trash bin)
- 41: SIM card
- 42: Up-Link
- 50: interference tool
- 51: S-TMSI
- 52: IMSI
- 60: mobility management entity database
- 70: trace box
- 80: graph
- 81: abscissa
- 82: ordinate
- 84: interference strength
- 90: graph
- 91: abscissa
- 92: ordinate
- 93: noise power threshold value
- 94-0: measured noise power value of subcarrier 0
- 94-1: measured noise power value of subcarrier 1
- 94-2: measured noise power value of subcarrier 2
- 95: interference time
- 100: graph
- 101: abscissa
- 102: ordinate
- 103: noise power threshold value
- 104: average noise power value
- 104-0: measured noise power value of subcarrier 0
- 104-1: measured noise power value of subcarrier 1
- 104-2: measured noise power value of subcarrier 2
- 105: interference time

## Claims

1. A method for monitoring an loT cell of a radio access network (10), comprising the steps of :
- monitoring a plurality of loT nodes (11, 12, 13, 14) of a radio access network (10) during a predetermined monitoring time, each monitored loT node (11, 12, 13, 14) servicing an loT cell of the radio access network (10) and having a known position, the loT cells serviced by the plurality of monitored loT nodes (11, 12, 13, 14) being located adjacent to each other;
- detecting an interference of an loT cell serviced by a monitored loT node (11, 12, 13);
- storing an interference entry for the detected interference, the interference entry comprising an identifier of the loT node (11, 12, 13) servicing the interfered loT node (11, 12, 13) and an interference timestamp of the detected interference ;
- determining an interfering loT device (20, 30, 40) by correlating the loT node identifiers of the stored interference entries with the interference timestamps of the stored interference entries ;
- locating the determined interfering loT device (20, 30, 40) by triangulating between the known positions of interfered loT nodes (11, 12, 13) having correlated loT node identifiers.

2. The method according to claim 1, wherein the interference entry further comprises a measured strength value of the detected interference and/or triangulating comprises using a measured strength value of the detected interference as a triangulation weight.

3. The method according to one of claims 1 or 2, wherein the interference entry further comprises an loT device identifier for every loT device (20, 30, 40) being up-linked to a monitored loT node (11, 12, 13, 14) at an interference time (95, 105) and an interfering loT device (20, 30, 40) is identified by correlating the loT device identifiers of the stored interference entries with the interference timestamps of the stored interference entries.

4. The method according to claim 3, wherein an IMSI (52) is stored as the loT device identifier.

5. The method according to claim 4, wherein storing the IMSI (52) comprises reading an S-TMSI (51) of the up-linked loT device (20, 30, 40) and determining the IMSI (52) associated with the read S-TMSI (51).

6. The method according to claim 5, wherein the IMSI (52) is determined by using a trace box (70) or querying a mobility management entity database (60).

7. The method according to one of the preceding claims, wherein correlating comprises calculating a correlation coefficient for every identifier of an loT node (11, 12, 13, 14) or an loT device (20, 30, 40) and the timestamps of the stored interference entries and determining an interfering loT device (20, 30, 40) or identifying an interfering loT device (20, 30, 40) comprises comparing every calculated correlation coefficient with a predetermined correlation threshold value.

8. The method according to one of the preceding claims, wherein detecting an interference comprises measuring a value of a noise power (94-0, 94-1, 94-2, 104-0, 104-1, 104-2) of the loT node (11, 12, 13, 14) as the strength value of the detected interference and alerting when a measured value of the noise power (94-0, 94-1, 94-2, 104-0, 104-1, 104-2) exceeds a predetermined noise power threshold value (93, 103).

9. The method according to one of the preceding claims, being carried out during a predetermined monitoring time of at least one week.

10. The method according to one of the preceding claims, being carried out for a plurality of narrow band loT cells.

11. The method according to one of the preceding claims, being carried out for an loT node (11, 12, 13, 14) servicing up to 1000 loT devices (20, 30, 40), particularly up to 6000 loT devices (20, 30, 40) and preferably more than 6000 loT devices (20, 30, 40).

12. A computer program product for monitoring an loT cell of a radio access network (10), with an interference tool (50) being configured for monitoring a plurality of loT nodes (11, 12, 13, 14), each monitored loT node (11, 12, 13, 14) servicing an loT cell of a radio access network (10) and having a known position, the interference tool (50) having a trigger module configured for detecting an interference of an loT node (11, 12, 13, 14) by comparing a measured value of a noise power (94-0, 94-1, 94-2, 104-0, 104-1, 104-2) of the loT node (11, 12, 13, 14) with a predetermined noise power threshold value (93, 103) and alerting when the measured value of the noise power (94-0, 94-1, 94-2, 104-0, 104-1, 104-2) exceeds the predetermined noise power threshold value (93, 103).

13. The computer program product according to claim 12, wherein the interference tool (50) has a scheduler module configured for starting monitoring of the plurality of loT nodes (11, 12, 13, 14) upon detection of an interference and/or confirmation of a user and stopping monitoring of the plurality of loT nodes (11, 12, 13, 14) after a predetermined monitoring time.

14. The computer program product according to one of claims 12 and 13, wherein the interference tool (50) has a correlation module configured for correlating identifiers of loT nodes (11, 12, 13, 14) or loT devices (20, 30, 40) of stored interference entries with interference timestamps of the stored interference entries.

15. The computer program product according to one of claims 12 to 14, wherein the interference tool (50) has an interface configured for communicating with a trace box (70) and/or with a mobility management entity database (60) of the radio access network (10) and/or the interference tool (50) has a data export module configured for exporting stored interference entries.

## Amended claims

### Amended claims in accordance with Rule 137(2) EPC.

1. A method for monitoring an IoT cell of a radio access network (10), comprising the following steps being carried out by an interference tool (50):
- monitoring a plurality of IoT nodes (11, 12, 13, 14) of a radio access network (10) during a predetermined monitoring time, each monitored IoT node (11, 12, 13, 14) servicing an IoT cell of the radio access network (10) and having a known position, the IoT cells serviced by the plurality of monitored loT nodes (11, 12, 13, 14) being located adjacent to each other;
- detecting an interference of an IoT cell serviced by a monitored IoT node (11, 12, 13);
- storing an interference entry for the detected interference, the interference entry comprising an identifier of the IoT node (11, 12, 13) servicing the interfered IoT cell and an interference timestamp of the detected interference;
- determining an interfering IoT device (20, 30, 40) by correlating the loT node identifiers of the stored interference entries with the interference timestamps of the stored interference entries ;
- locating the determined interfering IoT device (20, 30, 40) by triangulating between the known positions of interfered IoT nodes (11, 12, 13) having correlated IoT node identifiers.

2. The method according to claim 1, wherein the interference entry further comprises a measured strength value of the detected interference and/or triangulating comprises using a measured strength value of the detected interference as a triangulation weight.

3. The method according to one of claims 1 or 2, wherein the interference entry further comprises an IoT device identifier for every IoT device (20, 30, 40) being up-linked to a monitored IoT node (11, 12, 13, 14) at an interference time (95, 105) and an interfering IoT device (20, 30, 40) is identified by correlating the IoT device identifiers of the stored interference entries with the interference timestamps of the stored interference entries.

4. The method according to claim 3, wherein an IMSI (52) is stored as the loT device identifier.

5. The method according to claim 4, wherein storing the IMSI (52) comprises reading an S-TMSI (51) of the up-linked IoT device (20, 30, 40) and determining the IMSI (52) associated with the read S-TMSI (51).

6. The method according to claim 5, wherein the IMSI (52) is determined by using a trace box (70) or querying a mobility management entity database (60).

7. The method according to one of the preceding claims, wherein correlating comprises calculating a correlation coefficient for every identifier of an IoT node (11, 12, 13, 14) or an IoT device (20, 30, 40) and the timestamps of the stored interference entries and determining an interfering IoT device (20, 30, 40) or identifying an interfering IoT device (20, 30, 40) comprises comparing every calculated correlation coefficient with a predetermined correlation threshold value.

8. The method according to one of the preceding claims, wherein detecting an interference comprises measuring a value of a noise power (94-0, 94-1, 94-2, 104-0, 104-1, 104-2) of the IoT node (11, 12, 13, 14) as the strength value of the detected interference and alerting when a measured value of the noise power (94-0, 94-1, 94-2, 104-0, 104-1, 104-2) exceeds a predetermined noise power threshold value (93, 103).

9. The method according to one of the preceding claims, being carried out during a predetermined monitoring time of at least one week.

10. The method according to one of the preceding claims, being carried out for a plurality of narrow band IoT cells.

11. The method according to one of the preceding claims, being carried out for an IoT node (11, 12, 13, 14) servicing up to 1000 IoT devices (20, 30, 40), particularly up to 6000 loT devices (20, 30, 40) and preferably more than 6000 IoT devices (20, 30, 40).

12. A computer program product for monitoring an IoT cell of a radio access network (10), with an interference tool (50) to be run by a processor of a computer connected to the radio access network (10) and being configured for monitoring a plurality of IoT nodes (11, 12, 13, 14) of the radio access network (10), each monitored IoT node (11, 12, 13, 14) servicing an IoT cell of a radio access network (10) and having a known position, the IoT cells serviced by the plurality of monitored IoT nodes (11, 12, 13, 14) being located adjacent to each other, wherein the computer program product is configured for carrying out a method according to one of the claims 1 to 11.

13. The computer program product according to claim 12, wherein the interference tool (50) has a trigger module configured for detecting an interference of an IoT node (11, 12, 13, 14) by comparing a measured value of a noise power (94-0, 94-1, 94-2, 104-0, 104-1, 104-2) of the IoT node (11, 12, 13, 14) with a predetermined noise power threshold value (93, 103) and alerting when the measured value of the noise power (94-0, 94-1, 94-2, 104-0, 104-1, 104-2) exceeds the predetermined noise power threshold value (93, 103) and/or a scheduler module configured for starting monitoring the plurality of IoT nodes (11, 12, 13, 14) upon detection of an interference and/or confirmation of a user and stopping monitoring of the plurality of IoT nodes (11, 12, 13, 14) after a predetermined monitoring time.

14. The computer program product according to one of claims 12 and 13, wherein the interference tool (50) has a correlation module configured for correlating identifiers of IoT nodes (11, 12, 13, 14) or IoT devices (20, 30, 40) of stored interference entries with interference timestamps of the stored interference entries.

15. The computer program product according to one of claims 12 to 14, wherein the interference tool (50) has an interface configured for communicating with a trace box (70) and/or with a mobility management entity database (60) of the radio access network (10) and/or the interference tool (50) has a data export module configured for exporting stored interference entries.
